# EUROPEAN PATENT APPLICATION

(11) **EP 2 950 306 A1**
(43) Date of publication of application: **02.12.2015**
(21) Application number: 14461535.8
(22) Date of filing: 29.05.2014
(51) Int. Cl.: G10L 15/197, G06F 17/27, G06K 9/72

(54) **A method and system for building a language model**

(71) Applicant: Samsung Electronics Polska Spolka z organiczona odpowiedzialnoscia, 02-674 Warszawa (PL)
(72) Inventor: Broda, Bartosz, 01-231 Warszawa (PL); Mazur, Pawel, 51-222 Wroclaw (PL); Gwardys, Grzegorz, 00-246 Warszawa (PL); Durzewski, Maciej, 03-126 Warszawa (PL)
(74) Representative: Pawlowski, Adam

(57) **Abstract**

A method for building a language model, the method comprising the steps of: providing (101) a corpus; dividing (103) the corpus into words; dividing (104) the words into word chunks; calculating (105) n-gram tables; training (106) the model to create a language model; wherein calculating (105) the n-gram tables comprises generating n-grams of complete words, n-grams of word chunks and n-grams of words and chunks.

## Description

### TECHNICAL FIELD

This disclosure relates to processing of natural language, in particular to build a language model based on words and sub-words.

### BACKGROUND

Language models (LM) may be used for various applications related to processing of natural language, such as handwriting recognition, speech recognition, machine translation, part-of-speech tagging, parsing or information retrieval.

For example, in handwriting recognition, language models are helpful especially for processing cursive type of handwriting, because graphical approaches alone can easily introduce misspellings. Language models are used to select the word that has the highest probability of occurrence in the given context (i.e. the words written earlier).

In the foregoing description, a "token" is to be understood as a sequence of characters treated as a unit for further processing. Common kinds of tokens are words and punctuation characters. A "word" is to be understood as a sequence of characters (with or without punctuation characters) delimited by spaces. In general case, the rules of splitting text into tokens are application dependent. A sequence of n tokens is an "n-gram". Commonly used values for n are 1 (unigrams), 2 (bigrams), and 3 (trigrams), although usage of n>=4 is also met. An n-gram language model provides the probability of the last token in the n-gram sequence given the n-1 tokens of the n-gram. A "chunk" is to be understood as a fragment of a word, such as an approximation of a syllable. The chunk may be also a fragment, sub-word unit or syllable.

A common metric used to measure the performance of a handwriting, speech and optical character recognition system, is WER (Word Error Rate). Another parameter is OOV (Out of Vocabulary), which denotes the ratio of the number of tokens encountered during the usage of a language model which are not present in the model to the number of tokens found in the model.

Word-based language models are built on training data that have typical tokens, i.e. a token is an approximation of a complete word. An example sentence after tokenization would be presented as follows: "I requested an explanation and received the following reply". For such tokens, the following bigrams would be generated in a word-based model: I requested - requested an - an explanation - explanation and - and received - received the - the following - following reply - reply.

Subword-based language models are built on training data that have words divided into some chunks, for example syllables or approximations of syllables. In this case, the example sentence could be divided into tokens as follows: "I re ques ted an ex pla na tion and re cei ved the fol lo wing rep ly". For such tokens, the following bigrams would be generated in a subword-based model: I re - re ques - ques ted - ted an - an ex - ex pla - pla na - na tion - tion and - and re - re cei - cei ved - ved the - the fol - fol lo - lo wing - wing rep - rep ly-ly.

There are also known hybrid language models. For example, US6985861 discloses a method of speech detection using combined word and subword decoders. The word decoder and subword decoder each provide an N-best list of hypothetical matches to the spoken input. A list fusion module of the detection system selectively combines the two N-best lists to produce a final or combined N-best list.

Although a word-based model provides high recognition performance (WER) at word level, the number of words is large and therefore difficult to cover completely by training data, so during detection there are many OOV words, which decrease recognition rate for a whole sentence. In turn, in a subword-based model the number of subwords is much smaller than words, and combinations of subwords can create more words that would be found in a word model, thus reducing the number of OOV words. However, with the use of subword-based models, usually lower recognition performance is observed than with the use of word-based language models.

There is therefore a need to improve the recognition rate of language models. Moreover, there is a need to provide a language model that can be effectively used for prediction of words during writing.

### SUMMARY

There are presented herein a method and system for building a language model, a method for processing natural language, a computer program, a computer readable medium and a device comprising a natural language processor, as defined in the appended claims.

### BRIEF DESCRIPTION OF DRAWINGS

The method and system described herein is shown by means of exemplary embodiment, in which:
Fig. 1 presents steps of the method for building a language model;
Fig. 2 presents an example of splitting two words into three chunks each;
Fig. 3 presents a general example of splitting a word into chunks;
Fig. 4 presents an example of higher order n-grams;
Fig. 5 presents possible splits of a word;
Fig. 6 presents the situation of Fig. 5 in a compressed form;
Fig. 7 presents examples of patterns for unigrams and bigrams;
Fig. 8 presents a system for building a joint language model;
Fig. 9 presents a device using a joint language model.

### DESCRIPTION OF EMBODIMENTS

There is presented a joint language model, in which a special approach to the calculation of n-gram tables has been developed to cater for different possible tokenizations of text at the same time.

This is particularly suitable for prediction of words during handwriting, to propose the user with a list of candidate words for selection instead of writing them letter by letter, which speeds up the typing process. However, the presented model can be also used for other applications as described above, especially for applications where low OOV rates are important.

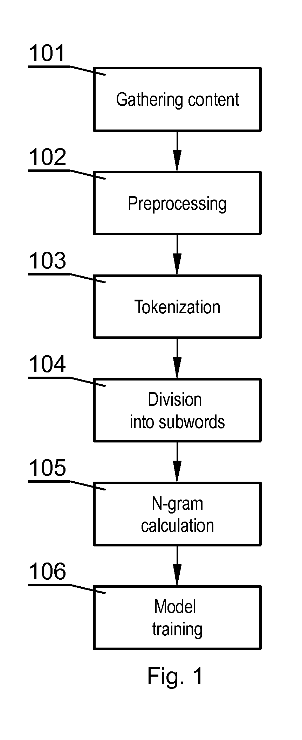

Fig. 1 presents steps of the method for building a language model. In step 101, a set of content is gathered to create a raw corpus, for example Internet is crawled to collect webpages. In step 102 the raw corpus is preprocessed, for example cleaned to remove unwanted parts, correct character encoding, delete HTML code etc. In step 103 the cleaned corpus is tokenized into words to create tokenized worded corpus.

In step 104, the word corpus is divided into subwords to build subworded corpus, so that the information about original word boundaries is maintained. Preferably, each word is divided into a maximum of a threshold (e.g. predefined) amount of chunks, e.g. three chunks. For example, this can be done by first dividing words into chunks in a manner equivalent to methods known for conventional subword-based models, and next joining at least two inner chunks together in case there are more than the predefined number of chunks. For example, a word "concatenation" can be first divided into "con ca te na tion" and then joined to form "con catena tion" chunks. So for the provided earlier example sentence, the split into chunks would look as follows (<B> denotes a maintained token boundary):
<B> I <B> re ques ted <B> an <B> ex plana tion <B> and <B> re cei ved <B> the <B> fol lo wing <B> rep ly <B> . <B>

In step 105, n-gram tables are calculated, which then serve as input data for calculating a language model. Optionally, the model may be limited in size by removing some elements, e.g. leaving a predefined number of the most frequent n-grams. The size limit plays an important role while using the language model on a device with limited resources, such as a mobile device.

In step 106 the model is trained to create a joint language model, which contains n-grams involving both words and subwords. Model training (building) is executed by calculation of probabilities for n-grams contained in the n-gram table based on the count of these n-grams, using typical methods known for language models.

The language model itself may have a form known in the art. For example, it can be ARPA-format text file comprising in consecutive lines n-grams having the length of 1, then n-grams having the length of 2, ..., and ending with n-grams having the length of n. Each line comprises the n-gram and its corresponding probability. It may further comprise, for n-grams having length from 1 to (n-1), a back-off value, which enables to calculate the probability for the n-gram at level k, based on n-grams from levels from 1 to k-1.

The foregoing part will describe the new method of calculating n-gram tables that assumes the existence of both complete words and partial words, different possible text tokenization at the same time.

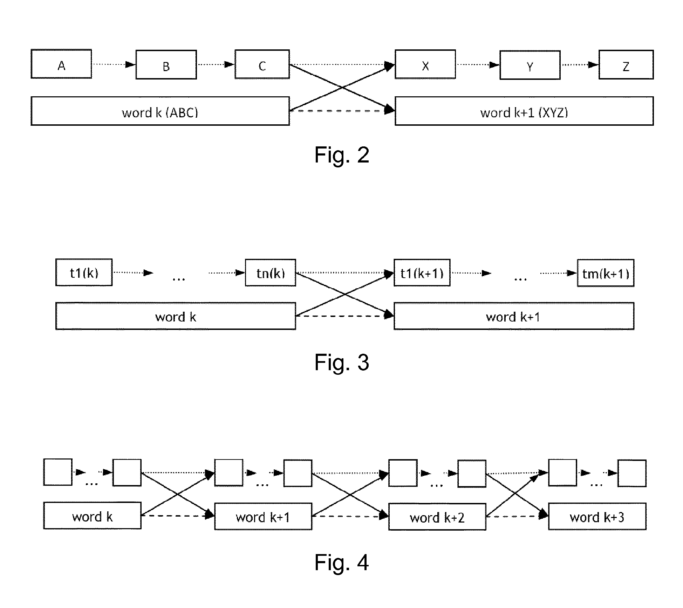

Additionally to having n-grams of complete words (as in word-based models) and n-grams of subsequent word chunks (as in subword-based models), there are also generated all possible n-grams of words and chunks. Fig. 2 presents an example situation of having two words (k, and k+1) and their one of possible splits into three chunks each: word k is split into chunks A, B, C and word k+1 is split into chunks X, Y, Z. Each arrow corresponds to the generation of one bigram (a sequence with more than one arrow corresponds to higher order n-grams). Example bigrams obtained this way are (A,B), (C,XYZ), (X,Y), (ABC,X), or (ABC,XYZ). The bigram (ABC,XYZ) would also be generated in a word model and bigrams (A,B) and (C,X) would be found in a pure subword model. New bigrams according to the joint model presented herein are (C, XYZ) and (ABC,X). In Fig. 2, the dotted arrows represent links that would also be found in subword models, the dashed arrow represent a link that would also be found in a word model. In the joint model presented herein, both the dotted and dashed links are considered, as well as the links represented with solid arrows.

In general, a word can be split into any number of chunks, with the upper bound being the number of letters in the word, as seen in Fig. 3.

Moreover, higher order n-grams may be composed of more than the spans of just two words, as shown in Fig. 4. In fact, for given size n of n-grams, the longest n-gram will span n words.

The splitting into chunks may be performed at different level of detail - at a coarse level the words are not split, and at a detailed level the words are split into letters. The method allows calculating n-grams for arbitrary level of split, from the most detailed to the most coarse level.

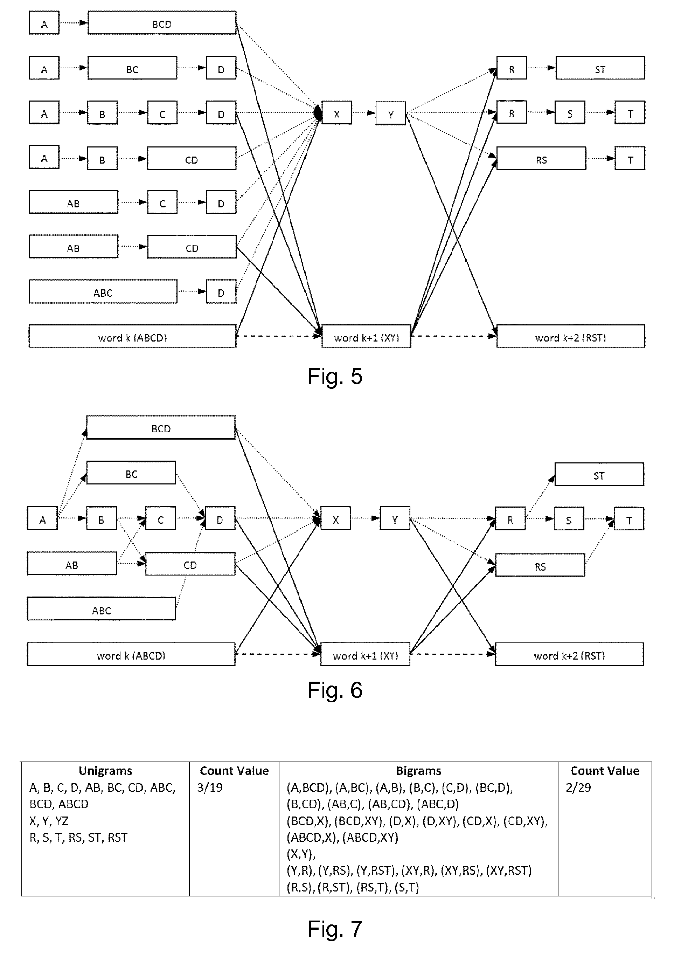

Fig. 5 presents all possible splits of a word k into a maximum of four chunks followed by a word k+1 which can be split into maximum two chunks, followed by a word k+2 which can be split into maximum three chunks.

Fig. 6 presents the same situation but compressed, so that each chunk occurs only once. When considering all these possible splits together, we have 10 possible unigrams of the first word, 3 unigrams of the second word, and 6 unigrams of the third word. Then, we have 10 bigrams within the span of the first word, 1 bigram within the span of the second word, 8 bigrams between the first two words, 6 bigrams between the last two words, and 4 bigrams within the span of the third word.

Fig. 7 presents unigrams and bigrams corresponding to the situation presented in Fig. 6. The count values are obtained as (w-n+1)/p, where w is the length of the training corpus (the number of words), n is the size of the n-grams and p is the total number of n-long n-grams within the training corpus. The values shown in Fig. 7 have been calculated with the simplified assumption (to better understand the example) that the 3 words shown in Fig. 6 form a complete training corpus. Then, for any given n-gram its entry in the n-gram table is followed by the corresponding count value multiplied by the number of appearances of that n-gram in the training corpus.

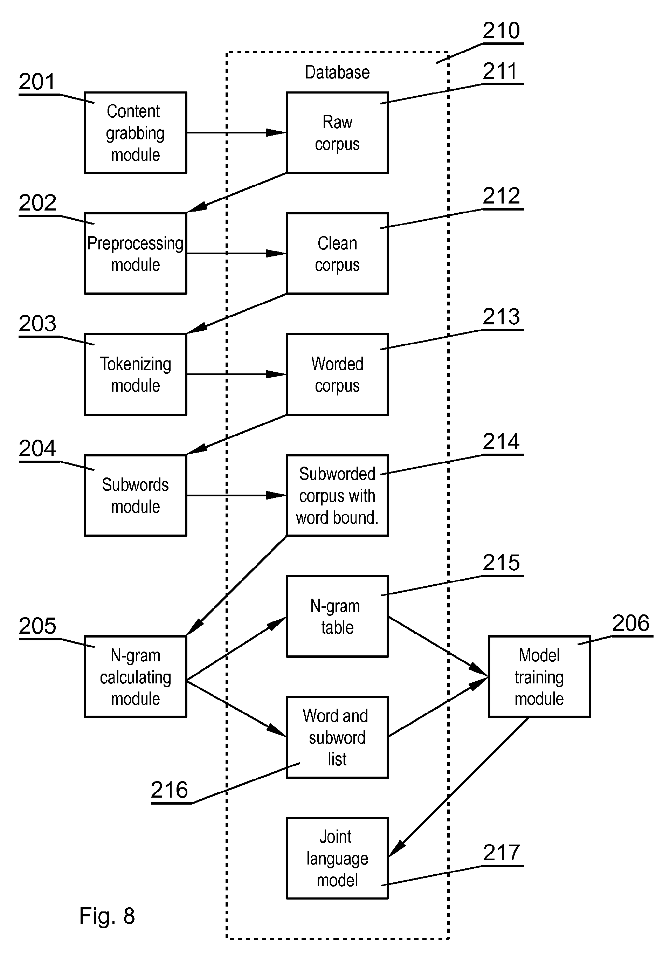

Fig. 8 presents a system for building a language model. The system comprises a content grabbing module 201 configured to perform step 101 of the method shown in Fig. 1 to generate a raw corpus 211 to be stored in a database 210. A preprocessing module 202 is configured to perform step 102 to generate a clean corpus 212. A tokenizing module 203 is configured to perform step 103 to generate a worded corpus 213. A subwords module 204 is configured to perform step 104 to generate a subworded corpus 214 with information about words boundaries. Modules 203, 204 may also form a single module. An n-gram calculating module 205 is configured to perform step 105 to generate an n-gram table 215 and a word and subword list 216, which are then used by a model training module 206 configured to perform step 106 to generate a joint language model 206.

The subword list 216 may be used as a dictionary for limiting the n-grams to be contained in the language model. In case no subword list 216 is generated, then the language model contains all n-grams. In case the subword list 216 is generated and limited to include some words only, the language model may be created to comprise only n-grams which comprise the words from the subword list 216.

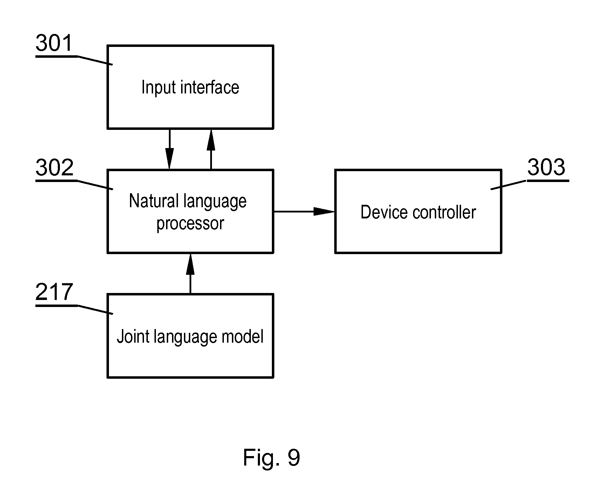

Fig. 9 presents a device using a joint language model, e.g. a tablet or a smartphone. The device comprises an input interface 301 for receiving natural language, e.g. a handwriting interface (e.g. a touch screen configured to receive input via a stylus) or an audio interface (e.g. a microphone for receiving voice input). A natural language processor 302 is configured to receive the input and to recognize it using the joint language model 217 built as described above. The recognized input is then passed to a device controller 303 or back to the input interface 301 (in case the recognized input is to be used for input prediction).

The presented method and system allow to decrease the WER as compared to subword-based models and to decrease the OOV as compared to word-based models. Moreover, the joint language model is particularly useful for prediction of words during typing or handwriting or during continuous speech recognition.

It can be easily recognized that the aforementioned a method and system may be computer-implemented, i.e. performed and/or controlled by one or more computer programs. Such computer programs are typically executed by utilizing the computing resources in a computing device. The programs are stored in non-volatile memory, for example a flash memory or volatile memory, for example RAM and are executed by a processor. These memories are exemplary recording media for storing computer programs comprising computer-executable instructions performing all the steps of the computer-implemented method according the concepts presented herein.

While the method and system presented herein have been depicted, described, and have been defined with reference to particular preferred embodiments, such references and examples of implementation in the foregoing specification do not imply any limitations. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow. Any combination of claims is envisaged.

## Claims

1. A method for building a language model, the method comprising the steps of:
- providing (101) a corpus;
- dividing (103) the corpus into words;
- dividing (104) the words into word chunks;
- calculating (105) n-gram tables;
- training (106) the model to create a language model;
- wherein calculating (105) the n-gram tables comprises generating n-grams of complete words, n-grams of word chunks and n-grams of words and chunks.

2. The method according to claim 1, wherein calculating (105) the n-gram tables comprises calculating the count value for an n-gram as (w-n+1)/p, where w is the number of words in the corpus, n is the size of the n-grams and p is the total number of n-long n-grams within the corpus.

3. The method according to any of previous claims, comprising dividing (104) the words into a number of word chunks that is not greater than a threshold.

4. The method according to claim 3, wherein dividing (104) the words into a number of word chunks comprises dividing words into a plurality of chunks and if the number of chunks is greater than the threshold, jointing at least two inner chunks together.

5. A method for processing natural language comprising use of the language model built according to any of claims 1-4.

6. A method for processing natural language comprising predicting words that are to be input by use of the language model built according to any of claims 1-4.

7. A computer program comprising program code means for performing all the steps of the method according to any of claims 1-4 when said program is run on a computer.

8. A computer readable medium storing computer-executable instructions performing all the steps of the method according to any of claims 1-4 when executed on a computer.

9. A device comprising a natural language processor (302) configured to receive input via an input interface (301) and recognize the input using the language model (217) built according to any of claims 1-4.

10. A system for building a language model, the system comprising:
- a module (201, 202) configured to provide a corpus (212);
- a tokenizing module (203) configured to divide the words of the corpus (212) to generate a worded corpus (213);
- a subwords module (204) configured to divide the words of the worded corpus (213) into word chunks to generate a subworded corpus (214);
- an n-gram calculating module (205) configured to calculate n-gram tables (215) on the basis of the subworded corpus (214);
- a model training module (206) configured to create a language model (217) on the basis of the n-gram tables (215);
- wherein the n-gram calculating module (205) is configured to calculate the n-gram tables by generating n-grams of complete words, n-grams of word chunks and n-grams of words and chunks.
